# EUROPEAN PATENT APPLICATION

(11) **EP 3 623 199 A1**
(43) Date of publication of application: **18.03.2020**
(21) Application number: 19196119.2
(22) Date of filing: 09.09.2019
(51) Int. Cl.: B60L 1/00, B60L 50/51, B60L 50/60, B60L 53/14, B60L 53/20, H02J 7/00, H02J 7/02

(54) **VEHICLE POWER SUPPLY DEVICE**

(30) Priority: 13.09.2018 JP 2018171464
(71) Applicant: YAZAKI CORPORATION, Minato-ku, Tokyo 108-8333 (JP)
(72) Inventor: MARUYAMA, Akinori, Susono-shi, Shizuoka 410-1194 (JP)
(74) Representative: Grünecker Patent- und Rechtsanwälte PartG mbB

(57) **Abstract**

In a vehicle power supply device (1), a power conversion unit (40) converts AC power supplied from an AC power supply (2) into DC power to charge a high-voltage battery (30) with the DC power. The power conversion unit (40) outputs, to an electric air conditioner (5), DC power of an intermediate voltage (Vm) provided by stepping down a voltage of DC power supplied from the high-voltage battery (30). A controller (42) controls a changeover switch (70) based on a detection result detected by a detection sensor (20) .

## Description

### BACKGROUND OF THE INVENTION

### 1. Field of the Invention

The present invention relates to a vehicle power supply device.

### 2. Description of the Related Art

Japanese Patent Application Laid-open No. 2017-41999 discloses, as a conventional vehicle power supply device, for example, a vehicle power supply system including a traveling battery, a standard battery having a lower voltage than that of the traveling battery, and a step-down converter stepping down a voltage of electric power supplied from the traveling battery and outputting it to the standard battery.

However, in the above-mentioned vehicle power supply system disclosed in Japanese Patent Application Laid-open No. 2017-41999, for example, the number of step-down converters increases and the device tends to increase in size, and there is room for further improvement in this point.

### SUMMARY OF THE INVENTION

The present invention has been made in view of the above-mentioned circumstances and an object thereof is to provide a vehicle power supply device capable of substantially preventing the device from being increased in size.

In order to solve the above mentioned problem and achieve the object, a vehicle power supply device according to one aspect of the present invention includes a battery that supplies DC power to a high-voltage load unit and a first low-voltage load unit having a lower voltage than a voltage of the high-voltage load unit; a power supply connector that is connected to an AC power supply unit supplying AC power to the battery; a power converter that converts the AC power supplied from the AC power supply unit into DC power to charge the battery with the DC power and outputs, to the first low-voltage load unit, DC power of a first voltage provided by stepping down a voltage of the DC power supplied from the battery; a switching unit that turns ON or OFF an electric connection between the power converter and the power supply connector and turns ON or OFF an electric connection between the power converter and the first low-voltage load unit; a detector that detects a start of supply of the AC power supplied from the AC power supply unit; and a controller that controls the switching unit based on a detection result detected by the detector, wherein when the detector detects the start of the supply of the AC power, the controller turns ON the connection between the power converter and the power supply connector to charge the battery with the DC power converted by the power converter, and turns OFF the connection between the power converter and the first low-voltage load unit to stop DC power output to the first low-voltage load unit from the power converter, and when the detector does not detect the start of the supply of the AC power, the controller turns ON the connection between the power converter and the first low-voltage load unit to output, to the first low-voltage load unit, the DC power of the first voltage stepped down by the power converter, is capable of supplying the DC power to the high-voltage load unit from the battery without passing through the power converter, and turns OFF the connection between the power converter and the power supply connector so as not to charge the battery with the DC power from the power converter.

According to another aspect of the present invention, in the vehicle power supply device, it is preferable to further include an insulating-type DC/DC converter that steps down a voltage, wherein the DC/DC converter outputs DC power of a second voltage provided by stepping down the first voltage to a second low-voltage load unit having a lower voltage than the voltage of the first low-voltage load unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating an example of a configuration of a vehicle power supply device according to an embodiment;
FIG. 2 is a block diagram illustrating an example of charging of the vehicle power supply device according to the embodiment;
FIG. 3 is a block diagram illustrating an example of discharging of the vehicle power supply device according to the embodiment;
FIG. 4 is a flowchart illustrating an example of operations of the vehicle power supply device according to the embodiment; and
FIG. 5 is a block diagram illustrating an example of a configuration of a vehicle power supply device according to a modification of the embodiment.

### DETAILED DESCRIPTION OF THE PREFERRED EMBODIMENTS

A mode for carrying out the present invention (embodiment) will be described in detail with reference to the drawings. Contents that are described in the following embodiment do not limit the present invention. Components to be described below include components that those skilled in the art can easily suppose and that are substantially the same components. Furthermore, configurations to be described below can be appropriately combined. Various omissions, replacements, or changes of the configurations can be made in a range without departing from the gist of the present invention.

### Embodiment

A vehicle power supply device 1 according to an embodiment will be described with reference to the drawings.

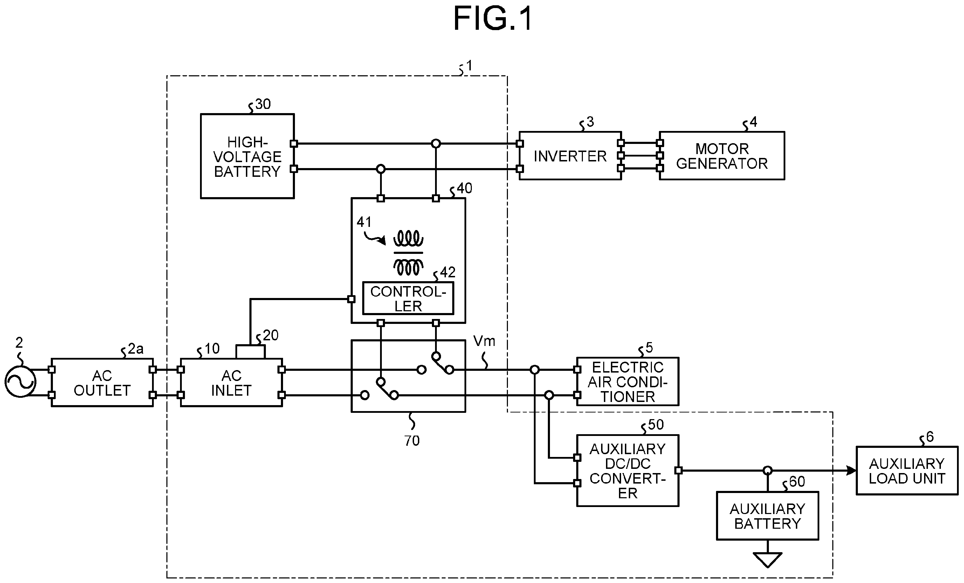

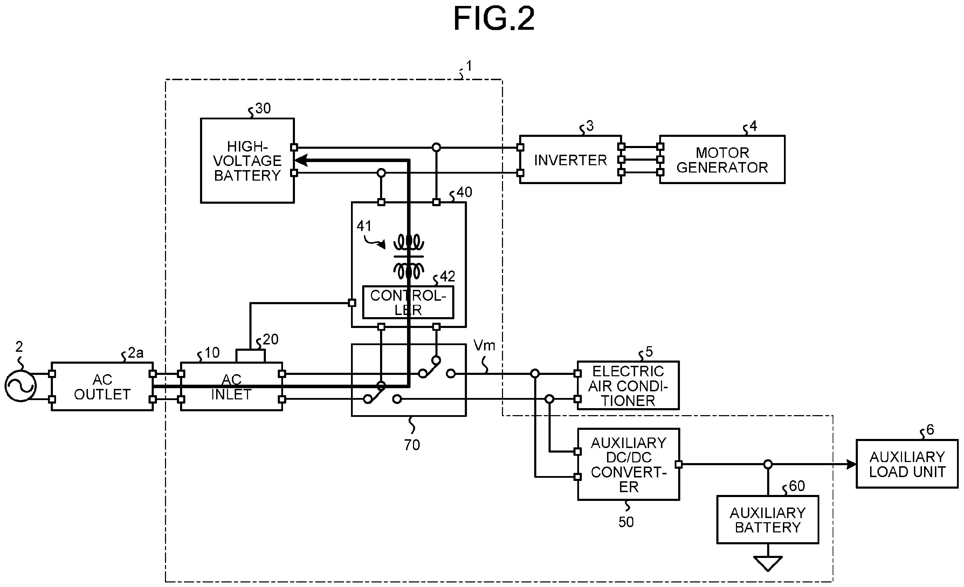

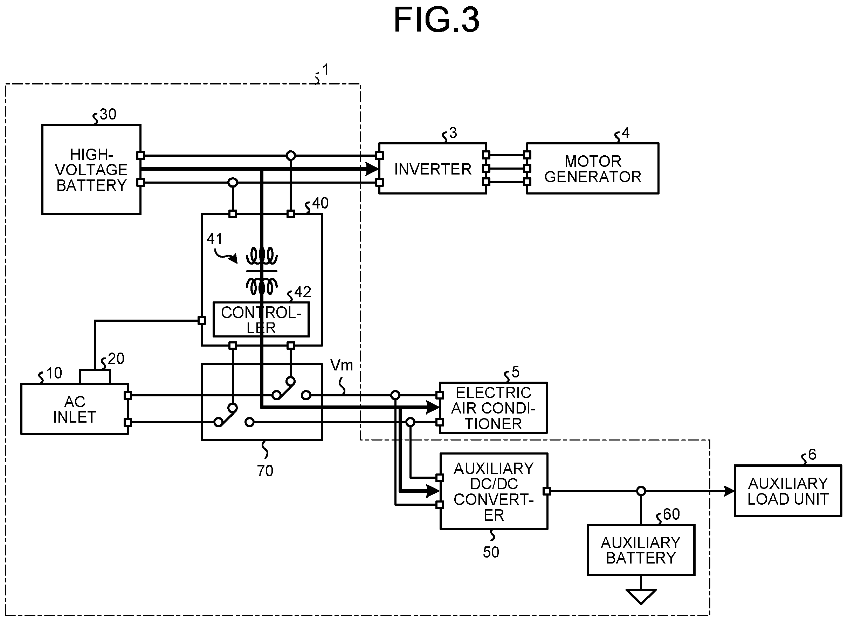

FIG. 1 is a block diagram illustrating an example of a configuration of the vehicle power supply device 1 according to the embodiment. FIG. 2 is a block diagram illustrating an example of charging of the vehicle power supply device 1 according to the embodiment. FIG. 3 is a block diagram illustrating an example of discharging of the vehicle power supply device 1 according to the embodiment.

The vehicle power supply device 1 is mounted on, for example, a vehicle such as an electric vehicle (EV) and a plug-in hybrid vehicle (PHV) and supplies electric power to a high-voltage load unit including an inverter 3 and a motor generator 4 and a low-voltage load unit including an electric air conditioner 5 and an auxiliary load unit 6 that has a lower voltage than that of the high-voltage load unit. The auxiliary load unit 6 is, for example, a vehicle system activation unit, a wiper, a headlight, or an audio device. The auxiliary load unit 6 is a load unit having a lower voltage than that of the electric air conditioner 5.

As illustrated in FIG. 1, the vehicle power supply device 1 includes an AC inlet 10 as a power supply connector, a detection sensor 20 as a detector, a high-voltage battery 30 as a battery, a power conversion unit 40 as a power converter, an auxiliary DC/DC converter 50 as an insulating-type DC/DC converter, an auxiliary battery 60, and a changeover switch 70 as a switching unit.

The AC inlet 10 is a connector that is connected to an AC outlet 2a of an AC power supply (alternating current (AC) power supply unit) 2 for domestic use. A part of the AC inlet 10 is exposed to an outside of the vehicle. The AC inlet 10 is connected to the AC outlet 2a for domestic use and AC power is output thereto.

The detection sensor 20 detects start of supply of the AC power. The detection sensor 20 detects the start of the supply of the AC power supplied through the AC outlet 2a, for example. The detection sensor 20 detects, for example, connection of the AC outlet 2a to the AC inlet 10, as the start of the supply of the AC power. The detection sensor 20 detects electric or mechanical connection of the AC outlet 2a and the AC inlet 10. The detection sensor 20 is connected to a controller 42, which will be described later, and outputs a detection result to the controller 42.

The high-voltage battery 30 supplies high-voltage direct current (DC) power. The high-voltage battery 30 has a voltage of, for example, 400 V, 800 V, or 1000 V and supplies relatively high-voltage DC power. The high-voltage battery 30 is connected to the electric air conditioner 5 through the power conversion unit 40 and supplies the DC power to the electric air conditioner 5. The high-voltage battery 30 is connected to the inverter 3 and supplies the DC power to the inverter 3. The inverter 3 converts the DC power supplied from the high-voltage battery 30 into AC power and supplies the AC power to the motor generator 4. The motor generator 4 is driven with the DC power supplied from the inverter 3 to rotate wheels of the vehicle.

The power conversion unit 40 converts electric power. The power conversion unit 40 is connected to the AC inlet 10 through the changeover switch 70 and is connected to the high-voltage battery 30. The power conversion unit 40 includes an AC/DC converter and a step-down DC/DC converter, which are not illustrated. The AC/DC converter converts AC power into DC power. The AC/DC converter, for example, converts the AC power output from the AC inlet 10 into DC power and charges the high-voltage battery 30 with the DC power, as illustrated in FIG. 2. The AC/DC converter includes a rectifying circuit and a bidirectional DC/DC converter, which are not illustrated. The rectifying circuit rectifies AC power into DC power. The rectifying circuit, for example, rectifies the AC power output from the AC inlet 10 into DC power. The bidirectional DC/DC converter includes an insulated transformer 41 and boosts or steps down a voltage using the transformer 41. The bidirectional DC/DC converter, for example, boosts, using the transformer 41, a voltage of the DC power rectified by the rectifying circuit and charges the high-voltage battery 30 with the boosted DC power.

The above-mentioned step-down DC/DC converter steps down a voltage. The step-down DC/DC converter, for example, steps down a voltage using the above-mentioned bidirectional DC/DC converter. The step-down DC/DC converter, for example, generates an intermediate voltage (first voltage) Vm provided by stepping down, using the transformer 41, a voltage of DC power supplied from the high-voltage battery 30 and outputs DC power of the intermediate voltage Vm to the electric air conditioner 5 through the changeover switch 70, as illustrated in FIG. 3. The step-down DC/DC converter outputs DC power provided by stepping down the intermediate voltage Vm to the auxiliary load unit 6 and the auxiliary battery 60 through the changeover switch 70 and the auxiliary DC/DC converter 50, as illustrated in FIG. 3. The intermediate voltage Vm is, for example, 240 V or 48 V but is not limited to the voltage. The transformer 41 insulates a high-voltage power supply system for traveling that includes the high-voltage battery 30, the inverter 3, and the motor generator 4 and a low-voltage power supply system that includes the electric air conditioner 5 and the auxiliary load unit 6. The transformer 41 further insulates the high-voltage power supply system for traveling and the AC inlet 10. Thus, the vehicle power supply device 1 can connect the high-voltage power supply system for traveling and the low-voltage power supply system through the power conversion unit 40, so that the high-voltage power supply system for traveling can be easily isolated, thereby improving maintainability.

The insulating-type auxiliary DC/DC converter 50 includes an insulated transformer (not illustrated) and steps down a voltage using the transformer. The auxiliary DC/DC converter 50 is provided between the step-down DC/DC converter of the power conversion unit 40 and the auxiliary load unit 6 (auxiliary battery 60) and steps down the intermediate voltage Vm of the DC power output from the step-down DC/DC converter. The auxiliary DC/DC converter 50 steps down the intermediate voltage Vm of, for example, 240 V or 48 V into a second voltage (for example, approximately 12 V). The auxiliary DC/DC converter 50 outputs DC power of the second voltage after step-down to the auxiliary load unit 6 and the auxiliary battery 60.

The auxiliary battery 60 supplies electric power to the auxiliary load unit 6. The auxiliary battery 60 is connected to the auxiliary DC/DC converter 50 and is charged with the DC power output from the auxiliary DC/DC converter 50. The auxiliary battery 60 is connected to the auxiliary load unit 6 and supplies the charged DC power to the auxiliary load unit 6.

The changeover switch 70 turns ON or OFF electric connection. As the changeover switch 70, for example, a mechanical relay or a semiconductor relay is employed. The changeover switch 70 is provided between the AC inlet 10 and the power conversion unit 40 and turns ON or OFF electric connection between the AC inlet 10 and the power conversion unit 40. The changeover switch 70 is provided between the power conversion unit 40 and the electric air conditioner 5 and turns ON or OFF electric connection between the power conversion unit 40 and the electric air conditioner 5. The changeover switch 70 is provided between the power conversion unit 40 and the auxiliary DC/DC converter 50 and turns ON or OFF electric connection between the power conversion unit 40 and the auxiliary DC/DC converter 50.

The changeover switch 70 is switched into a first connection state of turning ON the electric connection between the AC inlet 10 and the power conversion unit 40 to enable the high-voltage battery 30 to be charged. The changeover switch 70 is switched into a second connection state of turning ON the electric connection between the electric air conditioner 5 and the auxiliary DC/DC converter 50 and the power conversion unit 40 to enable the high-voltage battery 30 to supply electric power to the electric air conditioner 5, the auxiliary battery 60, and the auxiliary load unit 6.

The power conversion unit 40 further includes the controller 42. The controller 42 controls the changeover switch 70. The controller 42 is, for example, connected to the detection sensor 20 and controls the changeover switch 70 based on a detection result detected by the detection sensor 20.

The controller 42 switches the changeover switch 70 into the above-mentioned first connection state when the detection sensor 20 detects the start of the supply of the AC power. Then, the controller 42 turns ON the connection between the AC/DC converter of the power conversion unit 40 and the AC inlet 10 to charge the high-voltage battery 30 with the DC power output from the AC inlet 10 and converted by the AC/DC converter. Furthermore, the controller 42 turns OFF the connection between the step-down DC/DC converter of the power conversion unit 40 and the electric air conditioner 5 to stop DC power output to the electric air conditioner 5 from the step-down DC/DC converter. In addition, the controller 42 turns OFF the connection between the step-down DC/DC converter and the auxiliary DC/DC converter 50 to stop DC power output to the auxiliary load unit 6 and the auxiliary battery 60 through the auxiliary DC/DC converter 50 from the step-down DC/DC converter.

On the other hand, the controller 42 switches the changeover switch 70 into the above-mentioned second connection state when the detection sensor 20 does not detect the start of the supply of the AC power. The controller 42 turns ON the connection between the step-down DC/DC converter of the power conversion unit 40 and the electric air conditioner 5 to output, to the electric air conditioner 5, the DC power of the intermediate voltage Vm stepped down by the step-down DC/DC converter. Furthermore, the controller 42 turns ON the connection between the step-down DC/DC converter and the auxiliary DC/DC converter 50 to output the DC power to the auxiliary load unit 6 and the auxiliary battery 60 through the auxiliary DC/DC converter 50 from the step-down DC/DC converter. In addition, the controller 42 supplies the DC power to the inverter 3 from the high-voltage battery 30 without passing through the step-down DC/DC converter. The controller 42 turns OFF the connection between the AC/DC converter and the AC inlet 10 so as not to charge the high-voltage battery 30 with the DC power from the AC/DC converter.

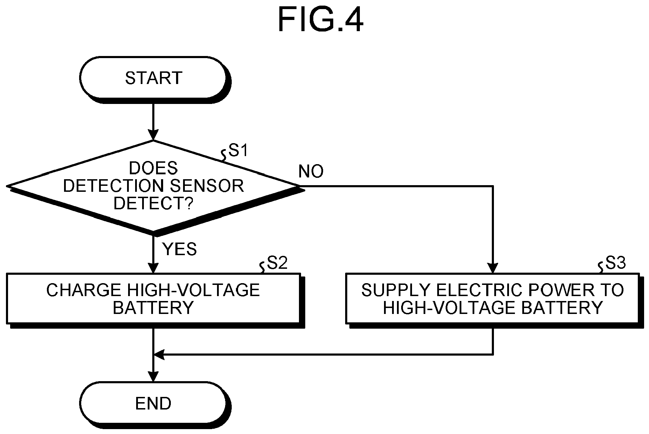

Next, an example of operations of the vehicle power supply device 1 will be described with reference to FIG. 4. FIG. 4 is a flowchart illustrating the example of the operations of the vehicle power supply device 1 in the embodiment. The vehicle power supply device 1 determines whether the detection sensor 20 detects the start of the supply of the AC power (step S1). The detection sensor 20 detects, for example, connection of the AC outlet 2a to the AC inlet 10, as the start of the supply of the AC power. When the detection sensor 20 detects the start of the supply of the AC power (Yes at step S1), the vehicle power supply device 1 charges the high-voltage battery 30 (step S2). The vehicle power supply device 1, for example, switches the changeover switch 70 into the first connection state to turn ON the connection between the AC/DC converter of the power conversion unit 40 and the AC inlet 10. The controller 42 then charges the high-voltage battery 30 with the DC power output from the AC inlet 10 and converted by the AC/DC converter, and the processing ends. The vehicle power supply device 1 switches the changeover switch 70 into the second connection state from the first connection state to charge the auxiliary battery 60 if necessary during the charging of the high-voltage battery 30. The vehicle power supply device 1 switches the changeover switch 70 into the second connection state from the first connection state when, for example, a charge ratio of the auxiliary battery 60 is lower than a predetermined reference value during the charging of the high-voltage battery 30. The vehicle power supply device 1 once stops charging of the high-voltage battery 30 and charges the auxiliary battery 60 with electric power supplied from the high-voltage battery 30. The vehicle power supply device 1 can thereby substantially prevent the charge ratio of the auxiliary battery 60 from being significantly lowered during the charging of the high-voltage battery 30.

When the detection sensor 20 does not detect the start of the supply of the AC power at the above-mentioned step S1 (No at step S1), the vehicle power supply device 1 supplies electric power from the high-voltage battery 30 (step S3). The vehicle power supply device 1, for example, switches the changeover switch 70 into the second connection state to turn ON the connection between the step-down DC/DC converter of the power conversion unit 40 and the electric air conditioner 5 and output the DC power of the intermediate voltage Vm stepped down by the step-down DC/DC converter to the electric air conditioner 5. Furthermore, the vehicle power supply device 1 turns ON the connection between the step-down DC/DC converter and the auxiliary DC/DC converter 50 to output the DC power to the auxiliary load unit 6 and the auxiliary battery 60 through the auxiliary DC/DC converter 50 from the step-down DC/DC converter. In addition, the controller 42 supplies the DC power to the inverter 3 from the high-voltage battery 30 without passing through the step-down DC/DC converter, and the processing ends.

As described above, the vehicle power supply device 1 in the embodiment includes the high-voltage battery 30, the AC inlet 10, the power conversion unit 40, the changeover switch 70, the detection sensor 20, and the controller 42. The high-voltage battery 30 supplies the DC power to the motor generator 4 and the electric air conditioner 5 having a lower voltage than that of the motor generator 4. The AC inlet 10 is connected to the AC power supply 2 that supplies the AC power to the high-voltage battery 30. The power conversion unit 40 converts the AC power supplied from the AC power supply 2 into the DC power and charges the high-voltage battery 30 with the DC power. The power conversion unit 40 outputs, to the electric air conditioner 5, the DC power of the intermediate voltage Vm provided by stepping down the voltage of the DC power supplied from the high-voltage battery 30. The changeover switch 70 turns ON or OFF the electric connection between the power conversion unit 40 and the AC inlet 10 and turns ON or OFF the electric connection between the power conversion unit 40 and the electric air conditioner 5. The detection sensor 20 detects the start of the supply of the AC power supplied from the AC power supply 2. The controller 42 controls the changeover switch 70 based on the detection result detected by the detection sensor 20.

When the detection sensor 20 detects the start of the supply of the AC power, the controller 42 turns ON the connection between the power conversion unit 40 and the AC inlet 10 to charge the high-voltage battery 30 with the DC power converted by the power conversion unit 40. Furthermore, the controller 42 turns OFF the connection between the power conversion unit 40 and the electric air conditioner 5 to stop DC power output to the electric air conditioner 5 from the power conversion unit 40. On the other hand, when the detection sensor 20 does not detect the start of the supply of the AC power, the controller 42 turns ON the connection between the power conversion unit 40 and the electric air conditioner 5 to output, to the electric air conditioner 5, the DC power of the intermediate voltage Vm stepped down by the power conversion unit 40. In addition, the controller 42 supplies the DC power to the motor generator 4 from the high-voltage battery 30 without passing through the power conversion unit 40. The controller 42 turns OFF the connection between the power conversion unit 40 and the AC inlet 10 so as not to charge the high-voltage battery 30 with the DC power from the power conversion unit 40.

With this configuration, the vehicle power supply device 1 can convert the AC power of the AC power supply 2 into the DC power using the power conversion unit 40 to charge the high-voltage battery 30 with it and step down the DC power of the high-voltage battery 30 to supply it to the electric air conditioner 5. The vehicle power supply device 1 can thereby use the power conversion unit 40 as a boosting converter when charging the high-voltage battery 30 and a step-down converter when discharging the high-voltage battery 30. That is to say, the vehicle power supply device 1 can use the bidirectional DC/DC converter of the power conversion unit 40 as the boosting converter in charging and the step-down converter in discharging. The vehicle power supply device 1 can thereby substantially prevent increase in the number of power converters, thereby substantially preventing the device from being increased in size. The vehicle power supply device 1 can reduce manufacturing cost. The vehicle power supply device 1 can decrease a creepage distance relatively by generating the intermediate voltage Vm, thereby substantially preventing the device from being increased in size. Since the vehicle power supply device 1 generates the intermediate voltage Vm, the electric air conditioner 5 and the auxiliary DC/DC converter 50 do not need special specifications for high voltage, and increase in manufacturing cost of the electric air conditioner 5 and the auxiliary DC/DC converter 50 can be prevented substantially.

The above-mentioned vehicle power supply device 1 includes the insulating-type auxiliary DC/DC converter 50 that steps down the voltage. The auxiliary DC/DC converter 50 outputs the DC power of the second voltage provided by stepping down the intermediate voltage Vm to the auxiliary load unit 6 and the like having a lower voltage than that of the electric air conditioner 5. With this configuration, the vehicle power supply device 1 can directly supply the DC power of the intermediate voltage Vm to the electric air conditioner 5 and supply the DC power of the second voltage provided by stepping down the intermediate voltage Vm to the auxiliary load unit 6 and the like, thereby configuring various power supplies.

### Modification

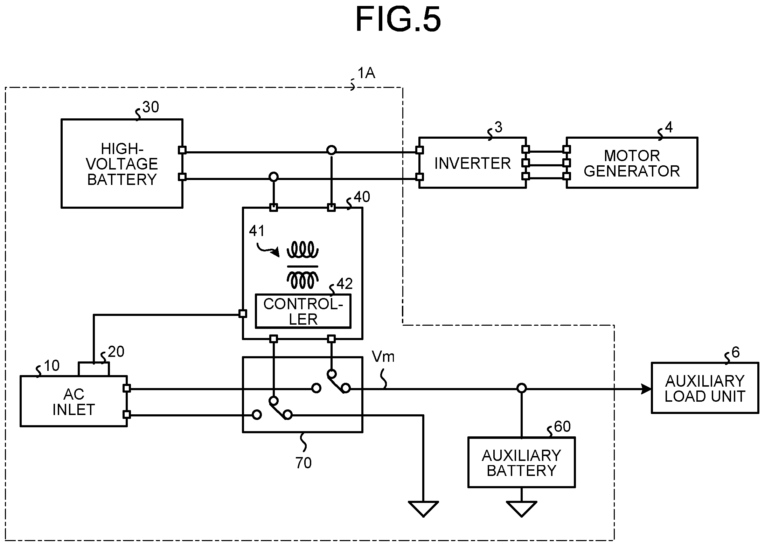

Next, a modification of the embodiment will be described. FIG. 5 is a block diagram illustrating an example of the configuration of a vehicle power supply device 1A according to a modification of the embodiment. The vehicle power supply device 1A differs from the vehicle power supply device 1 in the embodiment in the point that it includes no auxiliary DC/DC converter 50. In the modification, the same reference numerals denote components equivalent to those in the embodiment and detailed description thereof is omitted.

The vehicle power supply device 1A includes the AC inlet 10, the detection sensor 20, the high-voltage battery 30, the power conversion unit 40, the auxiliary battery 60, and the changeover switch 70. The step-down DC/DC converter of the power conversion unit 40 generates an intermediate voltage Vm provided by stepping down, using the transformer 41, a voltage of DC power supplied from the high-voltage battery 30, and outputs DC power of the intermediate voltage Vm to the auxiliary load unit 6 and the auxiliary battery 60 through the changeover switch 70. The intermediate voltage Vm is, for example, approximately 12 V but is not limited to this voltage. The changeover switch 70 is provided between the power conversion unit 40 and the auxiliary load unit 6 (auxiliary battery 60), and turns ON or OFF electric connection between the power conversion unit 40 and the auxiliary load unit 6 (auxiliary battery 60).

As described above, the vehicle power supply device 1A in the modification generates the intermediate voltage Vm provided by stepping down, using the transformer 41, the voltage of the DC power supplied from the high-voltage battery 30, and outputs the DC power of the intermediate voltage Vm directly to the auxiliary load unit 6 and the auxiliary battery 60 through the changeover switch 70. With this configuration, the vehicle power supply device 1A can use the intermediate voltage Vm as a secondary power supply being a general 12-V power supply.

Although the changeover switch 70 is provided on the outside of the power conversion unit 40, as an example, it is not limited to be provided in this manner and may be incorporated in the power conversion unit 40.

Although the high-voltage load unit includes the inverter 3 and the motor generator 4, as an example, it is not limited thereto and may include other electronic devices.

Although the low-voltage load unit includes the electric air conditioner 5 and the auxiliary load unit 6, as an example, it is not limited thereto and may include other electronic devices.

Although the controller 42 is provided in the power conversion unit 40, as an example, it is not limited to be provided in this manner and may be provided at another place.

The vehicle power supply device according to the present embodiment can use the power converter both as the converter in charging and as the converter in discharging. As a result, the device can be substantially prevented from being increased in size.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle power supply device (1) comprising:
a battery (30) that supplies DC power to a high-voltage load unit (3, 4) and a first low-voltage load unit (5) having a lower voltage than a voltage of the high-voltage load unit (3, 4);
a power supply connector (10) that is connected to an AC power supply unit (2) supplying AC power to the battery (30) ;
a power converter (40) that converts the AC power supplied from the AC power supply unit (2) into DC power to charge the battery (30) with the DC power and outputs, to the first low-voltage load unit (5), DC power of a first voltage (Vm) provided by stepping down a voltage of the DC power supplied from the battery (30);
a switching unit (70) that turns ON or OFF an electric connection between the power converter (40) and the power supply connector (10) and turns ON or OFF an electric connection between the power converter (40) and the first low-voltage load unit (5);
a detector (20) that detects a start of supply of the AC power supplied from the AC power supply unit (2); and
a controller (42) that controls the switching unit (70) based on a detection result detected by the detector (20), wherein
when the detector (20) detects the start of the supply of the AC power, the controller (42) turns ON the connection between the power converter (40) and the power supply connector (10) to charge the battery (30) with the DC power converted by the power converter (40), and turns OFF the connection between the power converter (40) and the first low-voltage load unit (5) to stop DC power output to the first low-voltage load unit (5) from the power converter (40), and
when the detector (20) does not detect the start of the supply of the AC power, the controller (42) turns ON the connection between the power converter (40) and the first low-voltage load unit (5) to output, to the first low-voltage load unit (5), the DC power of the first voltage (Vm) stepped down by the power converter (40), is capable of supplying the DC power to the high-voltage load unit (3, 4) from the battery (30) without passing through the power converter (40), and turns OFF the connection between the power converter (40) and the power supply connector (10) so as not to charge the battery (30) with the DC power from the power converter (40).

2. The vehicle power supply device (1) according to claim 1, further comprising:
an insulating-type DC/DC converter (50) that steps down a voltage, wherein
the DC/DC converter (50) outputs DC power of a second voltage provided by stepping down the first voltage (Vm) to a second low-voltage load unit (6) having a lower voltage than the voltage of the first low-voltage load unit (5).
